# EUROPÄISCHE PATENTANMELDUNG

(11) **EP 3 828 309 A1**
(43) Veröffentlichungstag der Anmeldung: **02.06.2021**
(21) Anmeldenummer: 20203302.3
(22) Anmeldetag: 22.10.2020
(51) Int. Cl.: C23C 28/00, C23C 22/04, F02F 3/02, F16J 9/00, F02F 5/00

(54) **KOLBENRING FÜR EINEN GROSSMOTOR SOWIE GROSSMOTOR**

(30) Priorität: 28.11.2019 EP 19212315
(71) Anmelder: Winterthur Gas & Diesel AG, 8401 Winterthur (CH)
(72) Erfinder: Moszner, Frank, 8055 Zürich (CH)
(74) Vertreter: Intellectual Property Services GmbH

(57) **Zusammenfassung**

Es wird ein Kolbenring für einen Grossmotor mit mindestens einem Zylinder, in dem ein Kolben hin und her bewegbar angeordnet ist, vorgeschlagen, welcher Kolbenring (1) einen Grundkörper (7) umfasst, der aus einem ersten Material gefertigt ist, welches einen ersten Wärmeausdehnungskoeffizienten aufweist, sowie eine Zwischenschicht (8), die auf der radial aussen liegenden Begrenzungsfläche des Grundkörpers (7) angeordnet ist, und die aus einem zweiten Material gefertigt ist, welches einen zweiten Wärmeausdehnungskoeffizient aufweist, und ferner eine Verschleissschutzschicht (9), die radial aussenliegend auf der Zwischenschicht (8) angeordnet ist, und die aus einem dritten Material gefertigt ist, welches einen dritten Wärmeausdehnungskoeffizienten aufweist, wobei der dritte Wärmeausdehnungskoeffizient kleiner ist als der erste Wärmeausdehnungskoeffizient, und der zweite Wärmeausdehnungskoeffizient kleiner ist als der dritte Wärmeausdehnungskoeffizient.

## Beschreibung

Die Erfindung betrifft einen Kolbenring für einen Grossmotor, sowie einen Grossmotor gemäss dem Oberbegriff des unabhängigen Patentanspruchs der jeweiligen Kategorie.

Grossmotoren werden klassischerweise als Grossdieselmotoren mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) bekannt.

Es sind insbesondere auch solche Grossmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-BrennstoffGemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Ein Beispiel für einen Grossmotor, der mit zwei unterschiedlichen Brennstoffen betreibbar ist, ist ein längsgespülter Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb, betreibbar sind.

Natürlich kann ein Grossmotor auch als Gasmotor ausgestaltet sein, der nur mit einem Gas oder mehreren Gasen als Brennstoff betrieben werden kann.

In jedem Zylinder des Grossmotors ist ein Kolben vorgesehen, welcher entlang einer Zylinderlauffläche zwischen einem oberen Totpunkt und einem unteren Totpunkt hin und her bewegbar angeordnet ist. Die Zylinderlauffläche wird üblicherweise von einer Zylinderlaufbuchse gebildet, die auch als Liner bezeichnet wird. Der Kolben begrenzt gemeinsam mit dem Zylinderdeckel den Brennraum, in welchem der Verbrennungsprozess stattfindet. An jedem Kolben ist mindestens ein Kolbenring vorgesehen, welcher in der radial aussenliegenden Mantelfläche des Kolbens und üblicherweise in einer dort vorgesehenen Umfangsnut angeordnet ist. Typischerweise sind an jedem Kolben mehrere Kolbenringe vorgesehen, die im Betriebszustand entlang der Zylinderlauffläche gleiten.

Ferner ist ein Schmiersystem vorgesehen, mit welchem zwischen den Kolbenringen und der Zylinderlauffläche ein Schmiermittelfilm ausgebildet wird, sodass der Kolben möglichst gut entlang der Zylinderlauffläche gleiten kann.

Im Betriebszustand sind die Kolbenringe und insbesondere der erste oder oberste Kolbenring, welcher dem Brennraum am nächsten ist, einem starken mechanischen, thermischen und chemischen Belastungskollektiv ausgesetzt. Um den dadurch bedingten Verschleiss möglichst gering zu halten und damit die Lebensdauer der Kolbenringe zu erhöhen, sind schon viele Anstrengungen unternommen worden.

In Grossmotoren und speziell in Grossdieselmotoren, die einen sehr hohen maximalen Zylinderinnendruck haben, ist es eine heute häufig verwendete Ausgestaltung der Kolbenringe, auf einem Grundkörper, der beispielsweise aus einem Gusseisen besteht, radial aussenliegend eine Verschleissschutzschicht vorzusehen, welche im Betriebszustand der Gegenlaufpartner der Zylinderlauffläche ist. Als Verschleissschutzschicht kann beispielsweise eine Hartchrombeschichtung vorgesehen sein.

Ein in Grossmotoren sehr häufig verwendetes Material für die Verschleissschutzschicht der Kolbenringe ist ein chrombasiertes Material, für das sich die Bezeichnung Chrom Keramik eingebürgert hat. Bei diesem Beschichtungssystem werden in eine Hartchrommatrix, die ein Mikrorissnetzwerk aufweist, keramische Hartpartikel eingelagert, beispielsweise Aluminiumoxid (Al₂O₃). Eine solche Beschichtung ist beispielsweise unter der markenrechtlich geschützten Bezeichnung CKS im Handel erhältlich. Verschleissschutzbeschichtungen aus Chrom Keramik zeichnen sich durch einen sehr geringen Verschleiss und damit lange Standzeiten aus.

Trotz der Leistungsfähigkeit solcher Chrom Keramik Beschichtungen treten in Grossmotoren immer wieder Probleme mit solchen Chrom Keramik Beschichtungen auf, insbesondere an dem obersten Kolbenring, welcher dem Brennraum am nächsten ist, und somit den stärksten Belastungen ausgesetzt ist. Dort beobachtet man in der Chrom Keramik Beschichtung erhebliche Rissbildungen, die in der Folge bis zum Abplatzen ganzer Bereiche der Beschichtung führen können. Während des Betriebs des Grossmotors kann dies zu erheblichen Beschädigungen nicht nur der Kolbenringe sondern auch der Zylinderlauffläche führen, die zeit- und kostenintensive Reparaturarbeiten zur Folge haben kann.

Ausgehend von diesem Stand der Technik ist es daher eine Aufgabe der Erfindung, einen Kolbenring für einen Grossmotor vorzuschlagen, wobei der Kolbenring eine Verschleissschutzschicht aufweist, die besonders beständig ist, und bei welcher die Gefahr einer starken Rissbildung oder eines Abplatzens der Beschichtung zumindest deutlich reduziert wird. Eine weitere Aufgabe der Erfindung ist es, einen Grossmotor mit einem solchen Kolbenring vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Kolbenring für einen Grossmotor mit mindestens einem Zylinder, in dem ein Kolben hin und her bewegbar angeordnet ist vorgeschlagen, welcher Kolbenring einen Grundkörper umfasst, der aus einem ersten Material gefertigt ist, welches einen ersten Wärmeausdehnungskoeffizienten aufweist, sowie eine Zwischenschicht, die auf der radial aussen liegenden Begrenzungsfläche des Grundkörpers angeordnet ist, und die aus einem zweiten Material gefertigt ist, welches einen zweiten Wärmeausdehnungskoeffizient aufweist, und ferner eine Verschleissschutzschicht, die radial aussenliegend auf der Zwischenschicht angeordnet ist, und die aus einem dritten Material gefertigt ist, welches einen dritten Wärmeausdehnungskoeffizienten aufweist, wobei der dritte Wärmeausdehnungskoeffizient kleiner ist als der erste Wärmeausdehnungskoeffizient, und der zweite Wärmeausdehnungskoeffizient kleiner ist als der dritte Wärmeausdehnungskoeffizient.

Mit dem Wärmeausdehnungskoeffizient ist im Rahmen der vorliegenden Anmeldung der mittlere Längenausdehnungskoeffizient im Temperaturintervall von 0°C bis 300°C gemeint, also ein Kennwert, der die Längenänderung eines Materials als Folge einer Temperaturänderung im Bereich von 0°C bis 300°C beschreibt. Wenn man mit L300 die Länge eines Körpers aus dem Material bei der Temperatur T300=300°C bezeichnet und mit L0 die Länge des Körpers bei der Temperatur T0=0°C, so ist der Wärmeausdehnungskoeffizient dieses Materials im Sinne der vorliegenden Anmeldung gegeben durch (L300 - L0) / (L0 . (T300 - T0))

Eine wichtige Erkenntnis ist es, dass die Rissbildung in der Verschleissschutzschicht bzw. das Abplatzen dieser Schicht in den aus dem Stand der Technik bekannten Kolbenringen insbesondere thermisch bedingte Ursachen hat. Der Wärmeausdehnungskoeffizient des Materials, aus welchem die harte Verschleissschutzschicht besteht, beispielsweise eine Chrom Keramik, ist nur etwas mehr als halb so gross wie der Wärmeausdehnungskoeffizient des Materials, aus welchem der Grundkörper des Kolbenrings besteht, beispielsweise Gusseisen. Im Betriebszustand des Grossmotors erwärmen sich die Kolbenringe und insbesondere der oberste Kolbenring sehr stark, beispielsweise auf über 200°C. Die Temperatur insbesondere des ersten Kolbenrings kann bis auf 230°C oder sogar noch mehr ansteigen. Da sich das Material des Grundkörpers bei dieser Änderung der Temperatur deutlich stärker ausdehnt als das Material der Verschleissschutzschicht, versucht die Verschleissschutzschicht dieser starken Expansion des Grundkörpers zu folgen. Hierdurch werden sehr starke thermische bedingte Spannungen in der Verschleissschutzschicht generiert. Da die harten Materialien, aus denen die Verschleissschutzschicht besteht, also beispielsweise Chrom Keramik, üblicherweise ziemlich spröde sind, wird durch diese thermisch induzierten Spannungen die Rissbildung in der Verschleissschutzschicht gefördert, welche schliesslich bis zum Abplatzen von Bereichen der Verschleissschutzschicht führen kann.

Erfindungsgemäss wird daher vorgeschlagen, zwischen der Verschleissschutzschicht und dem Grundkörper die Zwischenschicht vorzusehen, die aus dem zweiten Material gefertigt ist, welches den zweiten Wärmeausdehnungskoeffizienten aufweist, der kleiner ist als der dritte Wärmeausdehnungskoeffizient des dritten Materials, aus welchem die Verschleissschutzschicht gefertigt ist, und kleiner als der erste Wärmeausdehnungskoeffizient des ersten Materials, aus welchem der Grundkörper gefertigt ist. Dadurch das zwischen der Verschleissschutzschicht und dem Grundkörper eine Zwischenschicht vorgesehen ist, die aus dem zweiten Material gefertigt ist, dessen Wärmeausdehnungskoeffizient kleiner ist, als der dritte Wärmeausdehnungskoeffizient des dritten Materials, aus welchem die Verschleissschutzschicht gefertigt ist, werden die thermisch induzierten Spannungen, die aus der stärkeren Expansion des Grundkörpers resultieren, in der Zwischenschicht absorbiert, so dass während des Betriebs des Grossmotors die thermisch induzierten Spannungen in der Verschleissschutzschicht erheblich reduziert werden. Somit werden auch die Rissbildung in der Verschleissschutzschicht und das daraus resultierende Risiko des Abplatzens zumindest deutlich reduziert.

In der Praxis hat es sich als vorteilhaft erwiesen, dass die Zwischenschicht eine Dicke aufweist, welche grösser ist als eine Dicke der Verschleissschutzschicht. Mit der Dicke ist dabei jeweils die Erstreckung der jeweiligen Schicht in der radialen Richtung gemeint. Durch die grössere Dicke der Zwischenschicht lassen sich die thermisch induzierten Spannungen besonders gut absorbieren.

Vorzugsweise besteht der Grundkörper aus einem Gusseisen oder aus einem Stahl, d.h. das erste Material ist vorzugsweise ein Gusseisen oder ein Stahl.

Aufgrund der hohen Verschleissfestigkeit ist es bevorzugt, dass die Verschleissschutzschicht aus Hartchrom besteht, oder aus einer Hartchrommatrix, in welche harte Feststoffpartikel, z.B. keramische Partikel und/oder keramische Hartpartikel oder Diamantpartikel, eingelagert sind.

Bezüglich der Zwischenschicht ist es eine bevorzugte Ausführungsform, dass die Zwischenschicht aus einer Eisen-Nickel Legierung oder aus einer Eisen-Nickel-Kobalt Legierung gefertigt ist, insbesondere aus einer solchen Legierung die den Invar-Effekt aufweist. Mit dem Invar-Effekt ist im Rahmen der vorliegenden Anmeldung wie allgemein üblich die Eigenschaft gemeint, in einem gewiesen Temperaturbereich einen anormal kleinen oder zum Teil sogar negative Wärmeausdehnungskoeffizienten zu besitzen.

Insbesondere ist es bevorzugt, dass die Zwischenschicht aus einer Eisen-Nickel Legierung gefertigt ist, die mindestens 28 Gewichtsprozent Nickel enthält, vorzugsweise etwa 36 Gewichtsprozent Nickel, und bei welcher das dritte Material eine Chrom Keramik ist.

Ein besonders bevorzugtes zweites Material für die Zwischenschicht ist die Eisen-Nickel Legierung, die unter dem markenrechtlich geschützten Namen Invar bzw. Invar 36 im Handel erhältlich ist.

In einer anderen bevorzugten Ausführungsform ist die Zwischenschicht aus einer Eisen-Nickel-Kobalt Legierung gefertigt, die mindestens 28 Gewichtsprozent Nickel enthält, und mindestens 15 Gewichtsprozent Kobalt, vorzugsweise etwa 29.5 Gewichtsprozent Nickel und 17 Gewichtsprozent Kobalt, und bei welcher das dritte Material eine Chrom Keramik ist.

Ein solches ebenfalls besonders bevorzugtes zweites Material für die Zwischenschicht ist eine Eisen-Nickel-Kobalt Legierung, die unter der markenrechtlich geschützten Bezeichnung Kovar im Handel erhältlich ist.

Invar und Kovar zeichnen sich durch einen Wärmeausdehnungskoeffizienten aus, der kleiner ist als der typischer Metalle, beispielsweise kleiner als der Wärmeausdehnungskoeffizient von Chrom.

Ferner ist es bevorzugt, wenn die Zwischenschicht aus einer Eisen-Nickel Legierung gefertigt ist, die höchstens 48 Gewichtsprozent Nickel enthält.

Insbesondere aus fertigungstechnischen Gründen ist es vorteilhaft, wenn die Zwischenschicht auf den Grundkörper aufgeschweisst ist.

Als erstes Material für den Grundkörper des Kolbenrings sind solche Materialien bevorzugt, bei welchem der erste Wärmeausdehnungskoeffizient mindestens 10×10⁻⁶/K beträgt.

Als drittes Material für die Verschleissschutzschicht des Kolbenrings sind solche Materialien bevorzugt, bei welchem der dritte Wärmeausdehnungskoeffizient höchstens 8×10⁶/K und vorzugsweise höchstens 7×10⁻⁶/K beträgt.

Als zweites Material für die Zwischenschicht des Kolbenrings sind solche Materialien bevorzugt, bei welchem der zweite Wärmeausdehnungskoeffizient höchstens 6×10⁻⁶/K beträgt.

Wie bereits gesagt, ist dabei mit dem Wärmeausdehnungskoeffizienten jeweils der mittlere Längenausdehnungskoeffizient im Temperaturintervall von 0°C bis 300°C gemeint.

Gemäss einer ebenfalls bevorzugten Ausführungsform weist der Kolbenring ein Schloss auf, wobei bezüglich der Umfangsrichtung auf beiden Seiten des Schlosses radial innenliegend ein Einsatz vorgesehen ist, der aus einem vierten Material gefertigt ist, welches einen vierten Wärmeausdehnungskoeffizienten aufweist, wobei der vierte Wärmeausdehnungskoeffizient kleiner ist als der erste Wärmeausdehnungskoeffizient des ersten Materials, aus dem der Grundkörper gefertigt ist.

Aufgrund des Bimetall-Effekts hat diese Massnahme den Vorteil, dass bei einer Temperaturerhöhung die beiden Enden des Kolbenrings, welche das Schloss bilden, bezüglich der radialen Richtung nach innen gedrückt werden. Dies hat den Vorteil, dass diese beiden Enden des Kolbenrings bei einer Temperaturerhöhung nicht stärker sondern eher schwächer gegen den Gegenlaufpartner gedrückt werden, sodass ein übermässiger Verschleiss an diesen beiden Enden des Kolbenrings vermieden wird.

Dabei sind solche Ausführungsformen möglich, bei denen sich der Einsatz vom Schloss beginnend in Umfangsrichtung jeweils nur über einen Teilbereich des inneren Umfangs des Kolbenrings erstreckt.

Ferner sind Ausführungsformen möglich, bei denen sich der Einsatz über die gesamte radial innenliegende Seite des Kolbenrings erstreckt.

Vorzugsweise ist die Verschleissschutzschicht galvanisch auf die Zwischenschicht aufgebracht.

Durch die Erfindung wird ferner ein Grossmotor vorgeschlagen mit mindestens einem Zylinder, in welchem ein Kolben hin und her bewegbar angeordnet ist, wobei der Kolben mindestens einen obersten Kolbenring umfasst, wobei zumindest der oberste Kolbenring erfindungsgemäss ausgestaltet ist.

In einer bevorzugten Ausführungsform ist der Grossmotor als längsgespülter Zweitakt-Grossdieselmotor ausgestaltet, vorzugsweise als Dual-Fuel Grossdieselmotor, der in einem Flüssigmodus betreibbar ist, in welchem ein flüssiger Brennstoff zur Verbrennung in den Zylinder eingebracht wird, und der ferner in einem Gasmodus betreibbar ist, in welchem ein Gas als Brennstoff in den Zylinder eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine Aufsicht auf ein erstes Ausführungsbeispiel eines erfindungsgemässen Kolbenrings für einen Grossmotor
- Fig. 2:: einen Schnitt durch den Kolbenring aus Fig. 1 entlang der Schnittlinie II-II in Fig. 1
- Fig. 3:: eine Aufsicht auf ein zweites Ausführungsbeispiel eines erfindungsgemässen Kolbenrings für einen Grossmotor, und
- Fig. 4:: einen Schnitt durch den Kolbenring aus Fig. 3 entlang der Schnittlinie IV-IV in Fig. 3.

Gemäss der Erfindung wird ein Kolbenring für einen Grossmotor vorgeschlagen. Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Grossdieselmotor ausgestaltet ist, also als ein Motor, der mit zwei unterschiedlichen Brennstoffen betrieben werden kann. Im Speziellen kann dieses Ausführungsbeispiel eines Grossdieselmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbst entzündet und dadurch die Fremdzündung des Luft-BrennstoffGemisches im Brennraum verursacht.

Im Folgenden wird auf einen Grossmotor Bezug genommen, der als längsgespülter Dual-Fuel Zweitakt-Grossdieselmotor ausgestaltet ist.

Der Grossdieselmotor hat mindestens einen, üblicherweise aber eine Mehrzahl von Zylindern. Im Inneren jedes Zylinders ist in an sich bekannter Art ein Kolben entlang einer Zylinderachse zwischen einem oberen Totpunkt und einem unteren Totpunkt hin und her bewegbar angeordnet. Der Kolben ist in an sich bekannter Weise über eine Kolbenstange mit einem Kreuzkopf verbunden, welcher über eine Schubstange mit einer Kurbelwelle verbunden ist, sodass die Bewegung des Kolbens über die Kolbenstange, den Kreuzkopf und die Schubstange auf die Kurbelwelle übertragen wird, um diese zu drehen. Die Oberseite des Kolbens begrenzt gemeinsam mit einem Zylinderdeckel einen Brennraum, in welchen ein Brennstoff für die Verbrennung eingebracht wird. Im Gasmodus ist dieser Brennstoff ein Gas, beispielsweise ein Erdgas wie LNG (Liquefied Natural Gas), im Flüssigmodus ist dieser Brennstoff ein flüssiger Brennstoff wie beispielsweise Schweröl oder ein Dieselbrennstoff.

Jeder Zylinder weist typischerweise eine Zylinderlaufbuchse auf, die auch als Liner bezeichnet wird, und welche die Zylinderlauffläche für den Kolben umfasst. Im Betriebszustand gleitet der Kolben entlang dieser Zylinderlauffläche zwischen dem oberen Totpunkt und dem unteren Totpunkt hin und her. Der Kolben weist mindestens einen Kolbenring auf, der sich entlang der äusseren Mantelfläche um den Kolben herum erstreckt und typischerweise in einer Umfangsnut des Kolbens angeordnet ist. In sehr vielen Ausführungsformen sind mehrere Kolbenringe am Kolben vorgesehen, die bezüglich der Zylinderachse hintereinander angeordnet sind. Beispielsweise sind drei oder vier Kolbenringe vorgesehen, von denen jeder in eine jeweilige Umfangsnut in der Mantelfläche des Kolbens angeordnet ist. Der erste oder oberste Kolbenring ist dabei derjenige, welcher am nächsten am Brennraum angeordnet ist. Dieser oberste Kolbenring ist derjenige, welcher im Betrieb des Grossdieselmotors den stärksten thermischen und mechanischen Belastungen ausgesetzt ist. In an sich bekannter Weise gleiten die Kolbenringe im Betriebszustand entlang der Zylinderlauffläche, welche den Gegenlaufpartner für die Kolbenringe bildet.

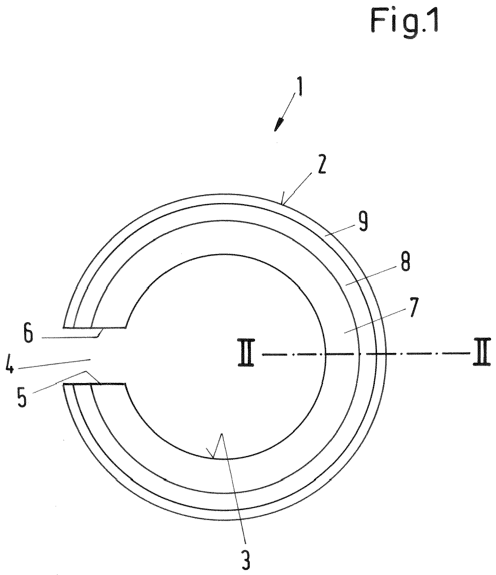

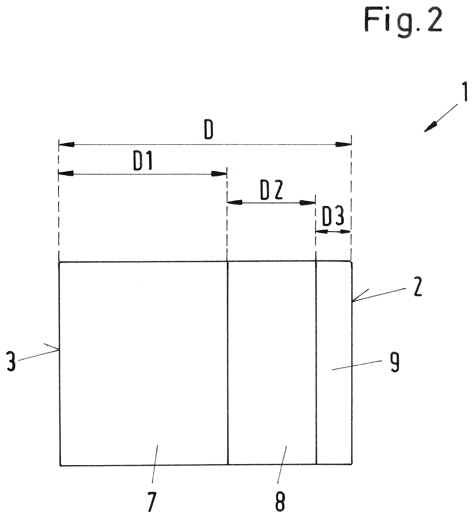

Fig. 1 zeigt eine Aufsicht auf ein erstes Ausführungsbeispiel eines erfindungsgemässen Kolbenrings für einen Grossmotor. Der Kolbenring ist in seiner Gesamtheit mit dem Bezugszeichen 1 bezeichnet. Zum besseren Verständnis zeigt Fig. 2 noch einen Schnitt durch den Kolbenring 1 aus Fig. 1 entlang der Schnittlinie II-II in Fig. 1. Der Kolbenring ist dafür ausgestaltet, dass er in an sich bekannter Weise in eine Umfangsnut eines Kolbens (nicht dargestellt) eingesetzt werden kann. Im montierten Zustand ist der Kolbenring 1 also senkrecht zur Zylinderachse des Zylinders angeordnet, in welchem sich der Kolben im Betriebszustand bewegt. Die durch die Zylinderachse festgelegte Richtung wird als axiale Richtung bezeichnet. Eine zur axialen Richtung senkrechte Richtung wird als radiale Richtung bezeichnet.

Der Kolbenring 1 hat eine im Wesentlichen ringscheibenförmige Ausgestaltung, wobei die radial aussenliegende Begrenzungsfläche des Kolbenrings 1 als Aussenfläche 2 bezeichnet wird, und die radial innenliegende Begrenzungsfläche wird als Innenfläche 3 bezeichnet. Im Betriebszustand bildet die Aussenfläche 2 den Gegenlaufpartner der Zylinderlauffläche (nicht dargestellt). Die Innenfläche ist dem Kolben zugewandt. Der Kolbenring 1 weist ferner eine Öffnung auf, die als Schloss 4 bezeichnet wird, und die sich in radialer Richtung von der Innenfläche 3 bis zur Aussenfläche 2 erstreckt, sodass der Kolbenring zwei Enden 5, 6 aufweist, die sich in Umfangsrichtung des Kolbenrings gesehen gegenüberliegen, nämlich ein erstes Ende 5 und ein zweites Ende 6. Der Kolbenring besteht aus drei ringförmigen Strukturen, die konzentrisch angeordnet sind, nämlich aus einem radial innenliegen angeordnetem Grundkörper 7, einer Zwischenschicht 8, die auf der radial aussen liegenden Begrenzungsfläche des Grundkörpers 7 angeordnet ist, sowie eine Verschleissschutzschicht 9, die auf der radial aussen liegenden Begrenzungsfläche der Zwischenschicht 8 angeordnet ist. Die radial aussen liegende Begrenzungsfläche der Verschleissschutzschicht 9 bildet die Aussenfläche 2 der Kolbenrings, welche im Betriebszustand entlang der Zylinderlauffläche gleitet.

Der Grundkörper 7 hat eine Dicke D1, womit die Erstreckung des Grundkörpers 7 in radialer Richtung gemeint ist. Die Zwischenschicht 8 hat eine Dicke D2, womit die Erstreckung der Zwischenschicht in radialer Richtung gemeint ist. Die Verschleissschutzschicht 9 hat eine Dicke D3, womit die Erstreckung der Verschleissschutzschicht 9 in radialer Richtung gemeint. Somit ergibt sich die Gesamtdicke D des Kolbenrings 1, also der Abstand zwischen der Innenfläche 3 und der Aussenfläche 2 aus der Summe D1+D2+D3=D.

Der Grundkörper 7 besteht aus einem ersten Material, das einen ersten Wärmeausdehnungskoeffizienten a1 aufweist. Die Zwischenschicht 8 besteht aus einem zweiten Material, das einen zweiten Wärmeausdehnungskoeffizienten a2 aufweist. Die Verschleissschutzschicht 9 ist aus einem dritten Material gefertigt, welches den dritten Wärmeausdehnungskoeffizienten a3 aufweist.

Die drei Materialien werden derart ausgewählt, dass der dritte Wärmeausdehnungskoeffizienten a3 kleiner ist als der erste Wärmeausdehnungskoeffizienten a1 und der zweite Wärmeausdehnungskoeffizienten a2 kleiner ist als der dritte Wärmeausdehnungskoeffizienten a3. Das bedeutet, dass die Zwischenschicht 8 den kleinsten Wärmeausdehnungskoeffizienten a2 hat und der Grundkörper den grössten Wärmeausdehnungskoeffizienten 1. Der dritte Wärmeausdehnungskoeffizient a3, den die Verschleissschutzschicht 9 hat liegt typischerweise zwischen dem zweiten Wärmeausdehnungskoeffizienten a2 der Zwischenschicht 8 und dem ersten Wärmeausdehnungskoeffizienten des Grundkörpers 7. Es ist also a2 < a3 <a1.

Da der Wärmeausdehnungskoeffizient im Rahmen der vorliegenden Anmeldung jeweils der mittlere Längenausdehnungskoeffizient im Temperaturintervall von 0°C bis 300°C ist, gilt die Beziehung a2 < a3 <a1 insbesondere in dem Temperaturbereich, in welchem sich die Temperatur des obersten Kolbenrings 1 im Betriebszustand des Grossmotors üblicherweise bewegt, also beispielsweise im Bereich von Umgebungstemperatur bis mindestens 250°C.

Das erste Material, aus welchem der Grundkörper 7 gefertigt ist, ist vorzugsweise eine eisenbasierte Legierung, beispielsweise ein Stahl oder ein Gusseisen. Gusseisen hat beispielsweise einen Wärmeausdehnungskoeffizienten von α1=12×10⁻⁶/K. Vorzugsweise wird das erste Material für den Grundkörper so gewählt, dass der erste Wärmeausdehnungskoeffizient a1 mindestens 10×10⁻⁶/K beträgt.

Das dritte Material, aus welchem die Verschleissschutzschicht 9 gefertigt ist, ist vorzugsweise ein Material, welches sehr verschleissfest ist. Insbesondere sind die folgenden Materialien als drittes Material für die Verschleissschutzschicht 9 geeignet: Hartchrom; Chrom Keramik, also eine Hartchrommatrix, in welche keramische Artikel eingelagert sind, vorzugsweise Aluminiumoxid (Al₂O₃) Partikel; eine Hartchrommatrix, in welche Diamantpartikel eingelagert sind.

Auch ist es möglich als Verschleissschutzschicht 9 eine Beschichtung vorzusehen die mittels physikalischer oder chemischer Ablagerung aus der Dampfphase erzeugt wird, also mittels eines PVD- oder CVP-Prozesses.

Vorzugsweise wird das dritte Material für die Verschleissschutzschicht so gewählt, dass der dritte Wärmeausdehnungskoeffizient a3 höchstens 8×10⁻⁶/K beträgt, vorzugsweise höchstens 7×10⁻⁶/K. Besonders bevorzugt ist das dritte Material Chrom Keramik. Diese weist typischerweise einen dritten Wärmeausdehnungskoeffizienten a3 auf, der etwa 6×10⁻⁶/K beträgt.

Als zweites Material wird vorzugsweise ein Material gewählt, dass einen sehr kleinen zweiten Wärmeausdehnungskoeffizienten a2 hat, der höchstens 6×10⁻⁶/K beträgt. Besonders bevorzugt weist das zweite Material den Invar-Effekt auf. Als zweites Material sind insbesondere Eisen-Nickel Legierungen oder Eisen-Nickel-Kobalt Legierungen geeignet, insbesondere solche Eisen-Nickel Legierungen die mindestens 28 Gewichtsprozent Nickel enthalten und besonders bevorzugt etwa 36 Gewichtsprozent Nickel. Eine solche Legierung ist beispielsweise die Eisen-Nickel Legierung, die unter dem markenrechtlich geschützten Namen Invar im Handel erhältlich ist.

Ein weiteres bevorzugtes zweites Material für die Zwischenschicht 8 ist die Eisen-Nickel-Kobalt Legierung, die unter der markenrechtlich geschützten Bezeichnung Kovar im Handel erhältlich ist.

Invar und Kovar zeichnen sich durch einen Wärmeausdehnungskoeffizienten aus, der kleiner ist als der typischer Metalle. Kovar hat im Bereich zwischen 0°C und 300°C einen Wärmeausdehnungskoeffizienten von etwa 5.3×10⁻⁶/K.

Vorzugsweise ist die Dicke D2 der Zwischenschicht 8 kleiner als die Dicke D1 des Grundkörpers 7. Vorzugsweise ist die Dicke D2 der Zwischenschicht 8 mindestens dreimal kleiner und besonders bevorzugt mindestens zehnmal kleiner als die Dicke D1 des Grundkörpers 7.

Zur Herstellung des Kolbenrings 1 wird beispielsweise wie folgt vorgegangen. Zunächst wird aus dem ersten Material, z.B. Gusseisen oder ein Stahl der Grundkörper 7 hergestellt. Dies kann je nach Material giesstechnisch oder mit einem spanabhebenden Verfahren wie Fräsen erfolgen. Anschliessend wird mit einem Schweissverfahren die Zwischenschicht 8 auf den Grundkörper 7 aufgeschweisst. Hierzu wird das zweite Material, also beispielsweise die Eisen-Nickel-Kobalt Legierung Kovar verwendet. Anschliessend wird mit einem galvanischen Verfahren auf der Zwischenschicht 8 die Verschleissschutzschicht generiert, die vorzugsweise aus Chrom Keramik als dem dritten Material besteht.

Vorzugsweise wird der derart gefertigte Kolbenring dann noch einer Wärmebehandlung unterzogen. Bei dieser Wärmebehandlung wird der Kolbenring für einen längeren Zeitraum auf einer Anlasstemperatur gehalten, die höher ist als die Betriebstemperatur des Kolbenrings 1 während des Betriebs des Grossmotors. Diese Wärmebehandlung dient dazu, in der Verschleissschutzschicht 9 des Kolbenrings 1 zurückbleibende Druckspannungen zu induzieren. Die Anlasstemperatur wird so hoch gewählt, dass sich die Zwischenschicht 8 aufgrund thermisch induzierter Spannungen plastisch deformiert. Beim anschliessenden Abkühlen des Kolbenrings 1 entwickeln sich dann in der Verschleissschutzschicht 9 Druckspannungen.

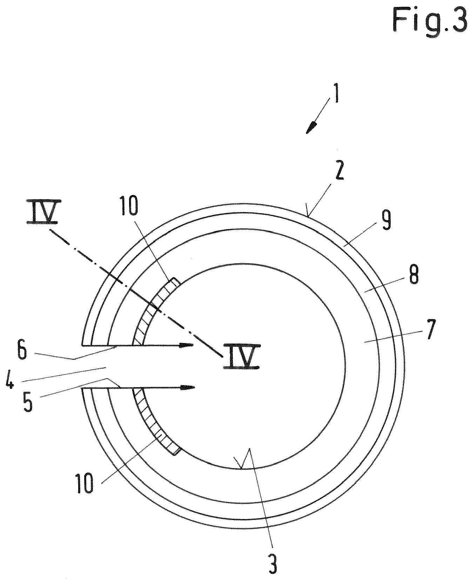

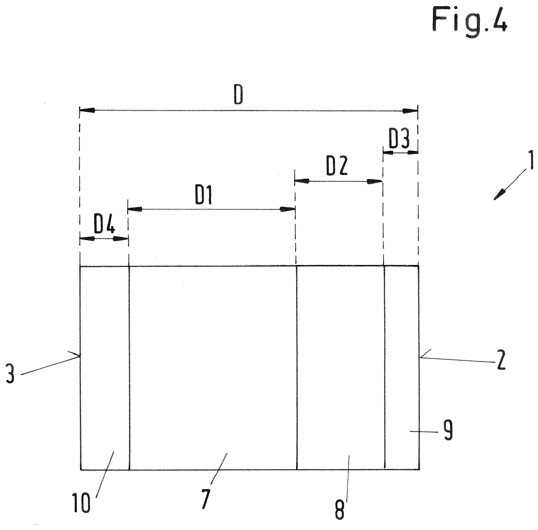

Fig. 3 zeigt eine Aufsicht auf ein zweites Ausführungsbeispiel eines erfindungsgemässen Kolbenrings 1 für einen Grossmotor. Zum besseren Verständnis zeigt Fig. 4 noch einen Schnitt durch dieses zweite Ausführungsbeispiel des Kolbenrings entlang der Schnittlinie IV-IV in Fig. 3.

Bei der folgenden Beschreibung des zweiten Ausführungsbeispiels wird nur auf die Unterschiede zum ersten Ausführungsbeispiel näher eingegangen. Ansonsten gelten die Erläuterungen bezüglich des ersten Ausführungsbeispiels in gleicher oder in sinngemäss gleicher Weise auch für das zweite Ausführungsbeispiel. Die Bezugszeichen haben die gleiche Bedeutung, wie sie bereits im Zusammenhang mit dem ersten Ausführungsbeispiel erklärt wurden.

Bei dem zweiten Ausführungsbeispiel des Kolbenrings 1 ist bezüglich der Umfangsrichtung auf beiden Seiten des Schlosses 4, also im Bereich des ersten Endes 5 sowie im Bereich des zweiten Endes 6 radial innenliegend ein Einsatz 10 vorgesehen, der aus einem vierten Material gefertigt ist welches einen vierten Wärmeausdehnungskoeffizienten a4 aufweist. Das vierte Material wird dabei so gewählt, dass der vierte Wärmeausdehnungskoeffizient a4 kleiner ist als der erste Wärmeausdehnungskoeffizient a1 des ersten Materials aus dem der Grundkörper 7 gefertigt ist. Das vierte Material kann muss aber nicht verschieden sein vom zweiten Material. Der Einsatz 10 hat eine Dicke D4, womit seine Erstreckung in radialer Richtung gemeint ist. Wo der Einsatz vorgesehen ist, ergibt sich die Gesamtdicke D aus der Summe D1+D2+D3+D4.

Aufgrund des Bimetall-Effekts hat diese Massnahme den Vorteil, dass bei einer Temperaturerhöhung die beiden Enden 5, 6 des Kolbenrings, welche das Schloss begrenzen, bezüglich der radialen Richtung nach innen gedrückt werden, wie dies die beiden Pfeile ohne Bezugszeichen in Fig. 3 andeuten. Dies hat den Vorteil, dass diese beiden Enden 5, 6 des Kolbenrings bei einer Temperaturerhöhung nicht stärker sondern eher schwächer gegen den Gegenlaufpartner gedrückt werden, sodass ein übermässiger Verschleiss an diesen beiden Enden 5, 6 des Kolbenrings 1 vermieden wird.

Als Variante des zweiten Ausführungsbeispiels ist es auch möglich, dass sich der Einsatz über die gesamte radial innenliegende Seite des Grundkörpers erstreckt, sodass die Innenfläche 3 des Kolbenrings 1 von dem Einsatz 10. gebildet wird. Bei dieser Ausführungsform besteht der Kolbenring laus vier ringförmigen Strukturen, die konzentrisch angeordnet sind.

## Patentansprüche

1. Kolbenring für einen Grossmotor mit mindestens einem Zylinder, in dem ein Kolben hin und her bewegbar angeordnet ist, welcher Kolbenring (1) einen Grundkörper (7) umfasst, der aus einem ersten Material gefertigt ist, welches einen ersten Wärmeausdehnungskoeffizienten aufweist, sowie eine Zwischenschicht (8), die auf der radial aussen liegenden Begrenzungsfläche des Grundkörpers (7) angeordnet ist, und die aus einem zweiten Material gefertigt ist, welches einen zweiten Wärmeausdehnungskoeffizient aufweist, und ferner eine Verschleissschutzschicht (9), die radial aussenliegend auf der Zwischenschicht (8) angeordnet ist, und die aus einem dritten Material gefertigt ist, welches einen dritten Wärmeausdehnungskoeffizienten aufweist, **dadurch gekennzeichnet, dass** der dritte Wärmeausdehnungskoeffizient kleiner ist als der erste Wärmeausdehnungskoeffizient, und der zweite Wärmeausdehnungskoeffizient kleiner ist als der dritte Wärmeausdehnungskoeffizient.

2. Kolbenring nach Anspruch 1, bei welchem die Zwischenschicht (8) eine Dicke (D2) aufweist, welche grösser ist als eine Dicke (D3) der Verschleissschutzschicht (9).

3. Kolbenring nach einem der vorangehenden Ansprüche, wobei das erste Material ein Gusseisen oder ein Stahl ist.

4. Kolbenring nach einem der vorangehenden Ansprüche, bei welchem die Verschleissschutzschicht (9) aus Hartchrom besteht, oder aus einer Hartchrommatrix, in welche harte Feststoffpartikel eingelagert sind.

5. Kolbenring nach einem der vorangehenden Ansprüche, bei welchem die Zwischenschicht (8) aus einer Eisen-Nickel Legierung oder aus einer Eisen-Nickel-Kobalt Legierung gefertigt ist.

6. Kolbenring nach einem der vorangehenden Ansprüche, bei welchem die Zwischenschicht (8) aus einer Eisen-Nickel Legierung gefertigt ist, die mindestens 28 Gewichtsprozent Nickel enthält, vorzugsweise etwa 36 Gewichtsprozent Nickel, und bei welcher das dritte Material eine Chrom Keramik ist.

7. Kolbenring nach einem der vorangehenden Ansprüche, bei welchem die Zwischenschicht (8) aus einer Eisen-Nickel-Kobalt Legierung gefertigt ist, die mindestens 28 Gewichtsprozent Nickel enthält, und mindestens 15 Gewichtsprozent Kobalt, vorzugsweise etwa 29.5 Gewichtsprozent Nickel und 17 Gewichtsprozent Kobalt, und bei welcher das dritte Material eine Chrom Keramik ist.

8. Kolbenring nach einem der vorangehenden Ansprüche, bei welchem die Zwischenschicht (8) auf den Grundkörper aufgeschweisst ist.

9. Kolbenring nach einem der vorangehenden Ansprüche, bei welchem der erste Wärmeausdehnungskoeffizient mindestens 10×10⁻⁶/K beträgt.

10. Kolbenring nach einem der vorangehenden Ansprüche, bei welchem der dritte Wärmeausdehnungskoeffizient höchstens 8×10⁻⁶/K und vorzugsweise höchstens 7×10⁻⁶/K beträgt.

11. Kolbenring nach einem der vorangehenden Ansprüche, bei welchem der zweite Wärmeausdehnungskoeffizient höchstens 6×10⁻⁶/K beträgt.

12. Kolbenring nach einem der vorangehenden Ansprüche, wobei der Kolbenring (1) ein Schloss (4) aufweist, und wobei bezüglich der Umfangsrichtung auf beiden Seiten des Schlosses (4) radial innenliegend ein Einsatz (10) vorgesehen ist, der aus einem vierten Material gefertigt ist, welches einen vierten Wärmeausdehnungskoeffizienten aufweist, wobei der vierte Wärmeausdehnungskoeffizient kleiner ist als der erste Wärmeausdehnungskoeffizient des ersten Materials, aus dem der Grundkörper (7) gefertigt ist.

13. Kolbenring nach Anspruch 11, wobei sich der Einsatz über die gesamte radial innenliegende Seite des Kolbenrings (1) erstreckt.

14. Kolbenring nach einem der vorangehenden Ansprüche, bei welchen die Verschleissschutzschicht (9) galvanisch auf die Zwischenschicht (8) aufgebracht ist.

15. Grossmotor mit mindestens einem Zylinder, in welchem ein Kolben hin und her bewegbar angeordnet ist, wobei der Kolben mindestens einen obersten Kolbenring (1) umfasst, **dadurch gekennzeichnet, dass** zumindest der oberste Kolbenring (1) gemäss einem der vorangehenden Ansprüche ausgestaltet ist, wobei der Grossmotor vorzugsweise als längsgespülter Zweitakt-Grossdieselmotor ausgestaltet ist, und insbesondere als Dual-Fuel Grossdieselmotor, der in einem Flüssigmodus betreibbar ist, in welchem ein flüssiger Brennstoff zur Verbrennung in den Zylinder eingebracht wird, und der ferner in einem Gasmodus betreibbar ist, in welchem ein Gas als Brennstoff in den Zylinder eingebracht wird.
